# EUROPÄISCHE PATENTSCHRIFT

(11) **EP 3 425 570 B1**
(45) Veröffentlichungstag und Bekanntmachung des Hinweises auf die Patenterteilung: **20.09.2023**
(21) Anmeldenummer: 18000497.0
(22) Anmeldetag: 05.06.2018
(51) Int. Cl.: G06K 19/077

(54) **RFID-TRANSPONDER FÜR EINE KONTAKTLOSE KOMMUNIKATION MIT PLASTIKGEHÄUSE**
RFID TRANSPONDER FOR A CONTACTLESS COMMUNICATION WITH PLASTIC HOUSING
TRANSPONDEUR RFID POUR UNE COMMUNICATION SANS CONTACT AVEC UN BOÎTIER EN PLASTIQUE

(30) Priorität: 07.07.2017 DE 102017006450
(43) Veröffentlichungstag der Anmeldung: 09.01.2019
(73) Patentinhaber: SES RFID Solutions GmbH, 40489 Düsseldorf (DE)
(72) Erfinder: Scattergood, Martin, 40489 Düsseldorf (DE)
(74) Vertreter: Henseler, Daniela

(56) Entgegenhaltungen:
- EP-A1- 3 179 412
- EP-A1- 3 179 413
- DE-A1-102006 051 379
- JP-A- H08 129 630
- US-A1- 2010 321 161
- US-A1- 2014 103 116
- US-A1- 2015 053 772
- US-A1- 2017 011 287

## Beschreibung

Die Erfindung betrifft einen kontaktlos ansprechenden RFID-Transponder mit einem Plastikgehäuse, das die Transponderkomponenten aufnimmt, nach dem Oberbegriff des Anspruchs 1.

Aus US 2010 0321161 A1 und US 2017 0011287 A1 ist jeweils ein RFID-Transponder mit mindestens einem Chip gemäß dem Oberbegriff des Anspruchs 1 bekannt. Der Chip ist mit einer Spulenantenne verbunden für eine kontaktlose Kommunikation und weist dazu ein Plastikgehäuse auf, das diese Transponderkomponenten als Einbauteile aufnimmt. Die Spulenwindung umgibt dabei die eingebaute Antenne für eine induktive Kopplung vollständig und bildet mit ihren zwei Enden Antennendrähte einer Dipolantenne für den UHF-Bereich aus. Unterliegt der Transponder hohen mechanischen Belastungen, so kommt zum Schutz der Transponderkomponenten häufig ein Plastikgehäuse (plastic package, PP) zum Einsatz. Eine derartige Transponderform kann in andere Gegenstände, Bauteile, Etiketten, Verkaufsverpackungen, Textilien usw. eingebaut werden und ermöglicht die Aufnahme größerer Chips und längerer Spulen. Die Funktionsreichweite wird dadurch vergrößert.

Aus US 2013 / 0 075 477 A1 ist bekannt ein RFID-Transponder mit einem Chip und einer mit dem Chip verbundenen Antenne für kontaktlose Kommunikation. Der RFID-Transponder wird in einem Plastikgehäuse aufgenommen. Eine Booster-Antenne am Außenumfang des Plastikgehäuses umgibt die eingebaute Antenne vollständig für induktive Kopplung.

Wie in WO 2009/080607 A2 beschrieben, wird in der RFID-Technologie mit zwei Frequenzen gearbeitet, der HF-Frequenz (13,56 MHz) und der UHF-Frequenz (860-960 MHz). Die Einkopplungsmechanismen unterscheiden sich dabei für beide Frequenzbereiche. HF-Systeme arbeiten mit induktiven Kopplungssystemen und benötigen für die Einkopplung eine Spulenantenne. Die UHF-Systeme arbeiten dagegen mit elektromagnetischen Wellen und benötigen in der Regel eine Dipolantenne. Ein UHF-Transponder kann sowohl im Nahbereich eingesetzt werden, wobei die Einkopplung über elektrische und/oder magnetische und/oder elektromagnetische Felder zum Einsatz kommt, als auch im Fernbereich, wobei die Einkopplung über elektromagnetische Wellen erfolgt. Zudem ist bekannt, einen RFID-Transponder in eine größere Booster-Antenne einzukoppeln, die zur Verstärkung der Sende- und Leseleistung des RFID-Transponders dient. Ein kleines Minilabel auf Papier- oder Polymerträgerbasis, bestehend aus einer Antenne und einem auf den Antennenkontakten montierten Chip, wird dazu eingesetzt. Minilabel und Booster-Antenne stehen dabei nicht in Kontakt über einen elektrischen Leiter, sondern werden ausschließlich über elektrische, magnetische oder elektromagnetische Felder miteinander gekoppelt. Eine solche Booster-Antenne kann gleichzeitig mit den sonstigen Druckinhalten auf ein Druckprodukt aufgedruckt werden. Die Positionierungsgenauigkeit ist hier deutlich geringer als bei der Direktkontaktierung. Bedingt durch den Druckvorgang ergibt sich die hinreichende Positionierungsgenauigkeit.

Um die Leistungsfähigkeit der kontaktlosen Kommunikation zu verbessern, ist auch aus DE 10 2006 051 379 A1 bekannt, eine Booster-Antenne mit einem RFID-Chipmodul induktiv zu koppeln. Dazu werden diese Komponenten auf ein Textilgewebe aufgebracht und fixiert.

Vorteilhaft ist somit das Entfallen der elektrischen Verbindung zwischen der RFID-Chipmodulantenne und der Booster-Antenne, wobei allerdings sicherzustellen ist, dass ein induktiver Kopplungsbereich zwischen der Booster-Antenne und RFID-Chipmodul-Antenne ausgebildet wird. Hierfür ist eine hinreichende Positionierungsgenauigkeit einzuhalten, die eine Fixierung der Booster-Antenne gegenüber dem Chipmodul verlangt.

Aufgabe der Erfindung ist es daher, einen RFID-Transponder zu schaffen, der hohen mechanischen Belastungen aussetzbar ist und dessen Leistungsfähigkeit durch die Anbindung einer Booster-Antenne verbessert ist.

Diese Aufgabe wird durch die Merkmale des Anspruchs 1 gelöst.

Hierdurch wird ein RFID-Transponder geschaffen, bei dem zum Schutz der Transponderkomponenten diese in einem Plastikgehäuse verbaut sind. Das Plastikgehäuse bildet ferner einen Spulenkern, auf dem die Booster-Antenne mit mindestens einer Spulenwindung angeordnet ist. Die Spulenwindung liefert einen Kopplungsbereich zwischen Booster-Antenne und Chip-Antenne und gewährt damit mechanisch fixierte Positionierungsgenauigkeit für eine optimale Ankopplung der Booster-Antenne an die Chip-Antenne. Das Plastikgehäuse erhält somit eine weitere Funktionalität als Fixier- und Ausrichthilfe für eine räumliche Ausrichtung des induktiven Kopplungsbereichs zwischen Booster-Antenne und Chip-Antenne.

Eine automatisierte Fertigung von RFID-Transpondern für den UHF-Bereich ist dadurch deutlich vereinfacht, zumal die Fertigung an einem Antennendrahtstrang unter abstandsweiser Umwicklung von RFID-Transpondern erfolgen kann. Durch Ablängen können dann einzelne Module von RFID-Transpondern mit angebrachter Booster-Antenne erzeugt werden.

Weitere Ausgestaltungen und Vorteile der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine perspektivische Ansicht eines RFID-Transponders mit Booster-Antenne vor der Anbringung eines vorzugsweise vorgesehenen Übergehäuses.
Fig. 2 zeigt schematisch eine perspektivische Ansicht des RFID-Transponders gemäß Fig. 1 mit fixiertem Übergehäuse,
Fig. 3 zeigt schematisch eine Drahtführung mit Spulenwindung der Booster-Antenne.

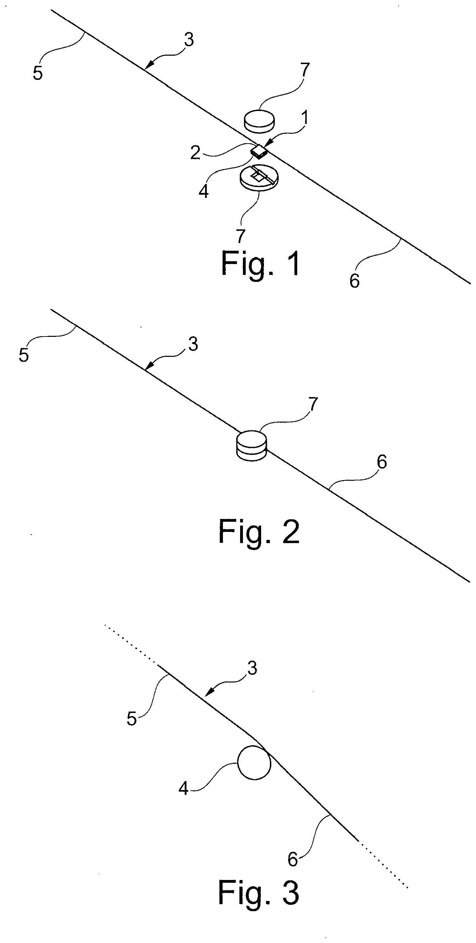

Fig. 1 zeigt einen RFID-Transponder, bei dem die Transponderkomponenten in einem Plastikgehäuse 1 verbaut sind. Der RFID-Transponder umfasst dabei in bekannter Weise einen Chip (nicht dargestellt) und eine Antenne (nicht dargestellt), die mit dem Chip für eine kontaktlose Kommunikation verbunden ist. Das Plastikgehäuse 1 nimmt diese Transponderkomponenten als Einbauteile auf. Das Plastikgehäuse 1 (plastic package, PP) bildet einen so genannten PP-Transponder aus, der für größere Funktionsreichweiten größere Microchips und längere Spulen aufnehmen kann. Das Material für das Plastikgehäuse 1 ist anwendungsbezogen wählbar. Das Plastikmaterial soll hier auch Composite aus aushärtbaren Harzen mitumfassen.

Das Plastikgehäuse 1 bildet ferner an seinem Außenumfang einen Spulenkern 2 aus. Auf dem Spulenkern 2 ist eine Booster-Antenne 3 mit mindestens einer Spulenwindung 4 angeordnet, wobei die Spulenwindung 4 die eingebaute Antenne des Chips für eine induktive Kopplung vollständig umgibt. Die zwei Enden 5, 6 der Spulenwindung 4 bilden Antennendrähte einer Dipolantenne für den UHF-Bereich aus.

Das Plastikgehäuse 1 und die mindestens eine Spulenwindung 4 sind vorzugsweise in ein Übergehäuse 7 eingebaut, das hier beispielsweise aus zwei zusammensetzbaren Hälften besteht. Das Übergehäuse 7 ist beispielsweise zylinderförmig.

Die mit dem Chip verbundene und in das Plastikgehäuse 1 integrierte Antenne (nicht dargestellt) und die mindestens eine Spulenwindung 4 der Booster-Antenne 3 bilden vorzugsweise zueinander ausgerichtete Leiterschleifen. Vorzugsweise ist der Spulenkern 2 konzentrisch zu der mit dem Chip verbundenen Antenne, die vorzugsweise als Wickelspule ausgebildet ist, angeordnet. Der Chip ist dann ebenfalls vorzugsweise mittig dieser Wickelspule angeordnet.

Der Spulenkern 2 kann einen runden oder eckigen Querschnitt aufweisen. Zur Ausbildung des Spulenkerns 2 kann eine umfänglich des Plastikgehäuses 1 ausgebildete oder aufgesetzte Rille, Ausnehmung oder sonstige Bahn vorgesehen sein. Allein eine Umfangsfläche des Plastikgehäuses 1 ist allerdings schon hinreichend als Lagerfläche für die mindestens eine Spulenwindung 4.

Mittels des vorzugsweise vorgesehenen Übergehäuses 7 können das Plastikgehäuse 1 und die mindestens eine Spulenwindung 4 aneinander fixiert werden, beispielsweise durch Verkleben, Verschweißen usw.

Die Transponderkomponenten umfassen in bekannter Weise einen Microchip, der für eine kontaktlose Kommunikation mit den Enden einer Chip-Antenne verbunden ist. Zusammen sind diese Transponderkomponenten zur Ausbildung des PP-RFID-Transponders in das Plastikgehäuse 1 eingebaut. Die Chip-Antenne hat folglich zu dem Raumgebilde des Plastikgehäuses 1 eine festgelegte Orientierung, dergegenüber die Spulenwindung 4 durch Nutzung des Plastikgehäuses 1 als Lagerfläche eine festgelegte Positionierung einnimmt. Vorzugsweise ist die Chip-Antenne eine flächige Spule deren Wickelebene als Spulenwindungsebene der Booster-Antenne 3 aufgreifbar ist zur Ausrichtung der Booster-Antenne 3 für eine bestmögliche Kopplung zwischen Chip-Antenne und Booster-Antenne 3.

Der Antennendraht, der für die Ausbildung der Booster-Antenne 3 verwendet wird, kann bei einer automatisierten Fertigung als ablängbare Kettenschnur genutzt werden.

## Patentansprüche

1. RFID-Transponder mit einem Chip,
mit einer Chip-Antenne, mit der der Chip für eine kontaktlose Kommunikation verbunden ist, und
mit einem Plastikgehäuse (1), das den Chip und die Chip-Antenne als Einbauteile aufnimmt, wobei
das Plastikgehäuse (1) an seinem Außenumfang einen Spulenkern (2) ausbildet, auf dem eine Booster-Antenne (3) mit mindestens einer Spulenwindung (4) angeordnet ist, wobei
die Spulenwindung (4) die eingebaute Chip-Antenne für eine induktive Kopplung vollständig umgibt und wobei
die zwei Enden (5, 6) der Spulenwindung (4) Antennendrähte einer Dipolantenne für den UHF-Bereich ausbilden,
**dadurch gekennzeichnet, dass**
eine Umfangsfläche des Plastikgehäuses (1) eine Lagerfläche für die mindestens eine Spulenwindung (4) ist und
die Chip-Antenne zu dem Plastikgehäuse (1) eine festgelegte Orientierung hat, wobei
die Spulenwindung (4) durch Nutzung des Plastikgehäuses (1) als Lagerfläche eine festgelegte Positionierung einnimmt.

2. RFID-Transponder nach Anspruch 1, **dadurch gekennzeichnet, dass** das Plastikgehäuse (1) und die mindestens eine Spulenwindung (4) in ein Übergehäuse (7) eingebaut sind.

3. RFID-Transponder nach Anspruch 2, **dadurch gekennzeichnet, dass** das Übergehäuse (7) zylinderförmig ist.

4. RFID-Transponder nach einem der Ansprüche 1 bis 3, **dadurch gekennzeichnet, dass** der Spulenkern (2) konzentrisch zu der mit dem Chip verbundenen Chip-Antenne, die als Wickelspule ausgebildet ist, angeordnet ist.

5. RFID-Transponder nach Anspruch 4, **dadurch gekennzeichnet, dass** der Chip mittig der Wickelspule angeordnet ist.

6. RFID-Transponder nach einem der Ansprüche 1 bis 5, **dadurch gekennzeichnet, dass** der Spulenkern (2) einen runden oder eckigen Querschnitt aufweist.

## Claims

1. RFID transponder comprising a chip,
comprising a chip antenna, to which the chip is connected for a contactless communication, and
comprising a plastic housing (1), which accommodates the chip and the chip antenna as integrated components, wherein
the plastic housing (1) forms a coil core (2) on its outer circumference on which a booster antenna (3) having at least one coil winding (4) is arranged, wherein
the coil winding (4) completely surrounds the built-in chip antenna in order to form an inductive coupling and wherein
the two ends (5, 6) of the coil winding (4) form antenna wires of a dipole antenna for the UHF range,
**characterized in that**
a peripheral surface of the plastic housing (1) is a bearing surface for the at least one coil winding (4) and
the chip antenna has a fixed orientation to the plastic housing (1), wherein
the coil winding (4) takes a fixed position by using the plastic housing (1) as bearing surface.

2. RFID transponder according to claim 1, **characterized in that** the plastic housing (1) and the at least one coil winding (4) are integrated into a main housing (7).

3. RFID transponder according to claim 2, **characterized in that** the main housing (7) is cylinder-shaped.

4. RFID transponder according to any one of claims 1 to 3, **characterized in that** the coil core (2) is arranged concentrically with respect to the chip antenna connected to the chip, which is designed as a winding coil.

5. RFID transponder according to claim 4, **characterized in that** the chip is arranged in the center of the winding coil.

6. RFID transponder according to any one of claims 1 to 5, **characterized in that** the coil core (2) has a round or angular cross section.

## Revendications

1. Transpondeur RFID avec une puce,
avec une antenne de puce, à laquelle la puce est reliée pour une communication sans contact, et
avec un boîtier en plastique (1), qui accueille la puce et l'antenne de puce en tant que pièces incorporées, dans lequel
le boîtier en plastique (1) réalise sur sa périphérie extérieure un noyau de bobine (2), sur lequel une antenne d'amplification (3) avec au moins un enroulement de bobine (4) est disposée, dans lequel
l'enroulement de bobine (4) entoure en totalité l'antenne de puce incorporée pour un couplage inductif, et dans lequel
les deux extrémités (5, 6) de l'enroulement de bobine (4) réalisent des fils d'antenne d'une antenne dipôle pour la bande UHF,
**caractérisé en ce que**
une surface périphérique du boîtier en plastique (1) est une surface de montage pour l'au moins un enroulement de bobine (4), et
l'antenne de puce présente par rapport au boîtier en plastique (1) une orientation fixée, dans lequel
l'enroulement de bobine (4) adopte un positionnement fixé du fait de l'utilisation du boîtier en plastique (1) en tant que surface de montage.

2. Transpondeur RFID selon la revendication 1, **caractérisé en ce que** le boîtier en plastique (1) et l'au moins un enroulement de bobine (4) sont incorporés dans un surboîtier (7).

3. Transpondeur RFID selon la revendication 2, **caractérisé en ce que** le surboîtier (7) est cylindrique.

4. Transpondeur RFID selon l'une quelconque des revendications 1 à 3, **caractérisé en ce que** le noyau de bobine (2) est disposé de manière concentrique par rapport à l'antenne de puce reliée à la puce, qui est réalisée en tant que bobine d'enroulement.

5. Transpondeur RFID selon la revendication 4, **caractérisé en ce que** la puce est disposée au centre de la bobine d'enroulement.

6. Transpondeur RFID selon l'une quelconque des revendications 1 à 5, **caractérisé en ce que** le noyau de bobine (2) présente une section transversale ronde ou polygonale.
